(19) Europäisches Patentamt
European Patent Office
Office européen des brevets

(11) **EP 4 127 732 B1**

(12) **EUROPÄISCHE PATENTSCHRIFT**

(45) Veröffentlichungstag und Bekanntmachung des Hinweises auf die Patenterteilung:
**09.07.2025   Patentblatt 2025/28**

(21) Anmeldenummer: **21700476.1**

(22) Anmeldetag: **11.01.2021**

(51) Internationale Patentklassifikation (IPC):
**G01P 5/165** *(2006.01)*        **G01F 1/44** *(2006.01)*
**G01F 1/46** *(2006.01)*

(52) Gemeinsame Patentklassifikation (CPC):
**G01P 5/165**; G01F 1/44; G01F 1/46

(86) Internationale Anmeldenummer:
**PCT/AT2021/060004**

(87) Internationale Veröffentlichungsnummer:
**WO 2021/195677 (07.10.2021 Gazette 2021/40)**

(54) **VORRICHTUNG ZUR GESCHWINDIGKEITSERFASSUNG MIT EINER KIELSONDE**

SPEED DETECTION DEVICE COMPRISING A KIEL PROBE

DISPOSITIF DE DÉTECTION DE VITESSE COMPRENANT UNE SONDE DE KIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **31.03.2020   AT 502632020**

(43) Veröffentlichungstag der Anmeldung:
**08.02.2023   Patentblatt 2023/06**

(73) Patentinhaber: **Feichtinger, Christoph**
**4920 Schildorn (AT)**

(72) Erfinder: **Feichtinger, Christoph**
**4920 Schildorn (AT)**

(74) Vertreter: **Hübscher & Partner Patentanwälte GmbH**
**Spittelwiese 4**
**4020 Linz (AT)**

(56) Entgegenhaltungen:
GB-A- 2 558 709            US-A- 5 365 795
US-A1- 2010 274 444      US-A1- 2015 346 005
US-A1- 2019 301 969

**Beschreibung**

Technisches Gebiet

Die Erfindung bezieht sich auf eine Vorrichtung zur Geschwindigkeitserfassung mit einer Kielsonde, die eine Strömungsgeschwindigkeitssonde aufweist, die von einem eine Venturidüse bildenden Mantelkörper umfasst ist.

Stand der Technik

Eine derartige Vorrichtung ist beispielsweise aus der WO 87/06710 A1 bekannt, nämlich eine Vorrichtung zur Messung der Strömungsgeschwindigkeit einer freien Strömung im Raum, die ausgehend von einem bekannten Venturi-Rohr zur Messung der Strömungsgeschwindigkeit in einem Rohr, in einem großen Winkelbereich bezüglich der Strömungsrichtung bzw. der Anblasrichtung einsetzbar ist. Dabei werden die statischen Drücke an zwei in Längsrichtung verschiedenen Stellen eines Strömungskörpers mit variierender Dicke gemessen und ihre Differenz gebildet. Zudem kann die Strömungsgeschwindigkeitssonde von einem eine Venturidüse bildenden Mantelkörper umfasst sein. US5365795 offenbart eine Kielsonde, die eine Strömungsgeschwindigkeitssonde aufweist, die von einem eine Venturidüse bildenden Mantelkörper umfasst wird. Eine ähnliche Vorrichtung offenbart die GB2558709 A, die allerdings kein Venturidüse und statische Drucksonden aufweist. Die Verwendung von Staudrucksensoren zur Bestimmung von Richtungsinformationen zeigt die US2019301969 A1.

Die DE 19735724 A1 offenbart einen Messfühler zur Befestigung an einem Tragrahmen in einem Gasturbinentriebwerk, wobei der Messfühler ein Mantelrohr umfasst, das eine stirnseitige Öffnung zum Einlass von Strömungsluft und mehrere Öffnungen im Rohrmantel aufweist. Innerhalb des Mantelrohrs sind ein Drucksensor und ein Temperatursensor derart nebeneinanderliegend angeordnet sind, dass sowohl der Drucksensor als auch der Temperatursensor in definierter Weise angeströmt werden, wozu mindestens sechs Vent-Öffnungen im Rohr vorgesehen sind.

Eine Kielsonde entspricht einer Weiterentwicklung eines Pitotrohres und dient zur Messung des Totaldrucks in bewegten Strömungen. Die Kielsonde hat gegenüber einem Pitotrohr den Vorteil, dass sie eine geringere Sensivität bezüglich des Anströmwinkels aufweist. Die Kielsonde besteht im Wesentlichen aus einer Venturidüse, in deren Inneren sich eine Pitotsonde befindet. Die Venturidüse lenkt dabei die Strömung in Axialrichtung um und sorgt somit für eine konstantere Anströmung der Pitotsonde. Neben der Geometrie der Venturidüse spielt auch die Position der Pitotsonde in Axialrichtung gesehen in der Venturidüse eine wesentliche Rolle für die Sensivität bezüglich des Anströmwinkels. Ein Nachteil liegt in der Schwierigkeit der Bestimmung der exakten Windrichtung im Raum für verschiedene Orientierungen des Sensors. Durch Verwendung des Kielsonden Prinzip kann zwar die Windgeschwindigkeit, nicht aber die Windrichtung für große Winkelbereiche belastbar erfasst werden. Probleme können sich bei Anströmwinkel ergeben die größer +-60° sind.

Venturidüsen bestehen aus einem Rohrstück mit einer Verengung des Eintritts- und einer Aufweitung des Austrittsquerschnitts, beispielsweise durch zwei gegeneinander gerichtete Konen, die an der Stelle ihres geringsten Durchmessers gegebenenfalls über ein Zylinderrohr vereint sind.

Die Bestimmung der Anströmrichtung kann mittels einer Mehrlochsonde erfolgen. In der Praxis sind zu diesem Zweck Zwei- oder Vierfingerlochsonden, Vierfingersonden, Keilsonden oder Zylindersonden im Einsatz. Das Risiko bei der Bestimmung der Anströmrichtung mittels Druckverfahren ist die Belastbare Kalibrierung. Das Problem bei der Kalibrierung ist, dass die Umströmung des Sondenkopfes bei Richtungsänderung höchst Instationär ist. Zusätzlich hängt die Umströmung stark von der Turbulenten Anströmung ab. Lokale Ablöseeffekte bei Schräganströmung können abhängig von der Anströmung an unterschiedlichen Stellen auftreten wodurch die Kalibrierung für sämtliche Bedingungen durchgeführt werden muss.

Aktuell verfügbare Messgeräte zum Bestimmen der Windgeschwindigkeit sind meist sehr groß und vor allem in Verbindung mit der notwendigen Auswerteeinheit nicht überall ganz einfach zu montieren. Windmessungen an bewegten Objekten werden heutzutage überwiegend mit Pitot-, Staudruck- und Mehrlochsonden durchgeführt. Bei Messungen an bewegten Objekten ändern sich daher neben der Zeit auch der Messort und die Windrichtung ständig. Je nach Dynamik des bewegten Objektes ergeben sich daraus Störungen der eigentlichen Windmessung.

Trägheitsnavigationssysteme sind 3-D-Messsysteme mit einer inertialen Messeinheit als zentraler Sensoreinheit mit mehreren Beschleunigungs- und Drehratensensoren. Durch Integration der gemessenen Beschleunigungen und Drehraten wird laufend die räumliche Bewegung beispielsweise von Fahr- oder Flugzeugen bestimmt. Eine Absolutposition wie mit einem GPS kann damit allerdings nicht bestimmt werden. Der Hauptvorteil von Trägheitsnavigationssystemen ist, dass dieses referenzlos betrieben werden können, also unabhängig von jeglichen Ortungssignalen. Allerdings ist ein Drift der Sensoren unvermeidlich.

Aus der WO 2017 197 524 A1 sind ein Verfahren und eine Vorrichtung zum Überwachen des fluiddynamischen Widerstands an einem Objekt wie einem Fahrrad, einem Bodenfahrzeug, einem Wasserfahrzeug, einem Flugzeug oder einem Teil einer Windkraftanlage bekannt. Dazu ist eine Anordnung von Sensoren vorgesehen, welche eine Leistungsaufnahme zum Antreiben des Objekts, die Luftgeschwindigkeit und -richtung relativ zur Bewegung des Objekts und eine Fahrgeschwindigkeit des Objekts erfasst. Es können auch folgende Sensorwerte aufgenommen werden, Temperatur, Höhe und Luftfeuchtigkeit zur Messung der Luftdichte. Sensorwerte können auch Neigungswinkel und Vorwärtsbeschleunigung anzeigen.

Eine aus der US 2018 321272 A1 bekannte Fluiderfassungsvorrichtung umfasst einen Außenkörper mit einer Vorderseite, einer Rückseite und einem Innenraum, wobei der Außenkörper einen an der Vorderseite angeordneten Fluideinlass enthält, eine oder mehrere Entlüftungsöffnungen, die hinter dem Fluideinlass angeordnet sind, um den Durchgang von Fluid durch die Fluiderfassungsvorrichtung zu ermöglichen und mindestens einen Lastsensor, der mit dem Innenkörper gekoppelt ist, um eine Fluidwiderstandskraft auf den Innenkörper zu messen.

Darstellung der Erfindung

Der Erfindung liegt somit die Aufgabe zugrunde, eine Vorrichtung zur Geschwindigkeitserfassung der eingangs geschilderten Art zu schaffen, die bei kompakten Abmessungen eine ordnungsgemäße Messung von Windgeschwindigkeit und Windrichtung ermöglicht.

Die Erfindung löst diese Aufgabe dadurch, dass der Mantelkörper als Mehrlochstaudrucksonde mit über den Mantelumfang verteilt angeordneten Löchern im Mantelkörper ausgebildet ist, dass die über den Mantelumfang verteilt angeordneten Löcher im Mantelkörper in einer senkrecht zu einer Strömungsgeschwindigkeitssondenlängsachse stehenden Ebene um die Strömungsgeschwindigkeitssondenlängsachse vorzugsweise gleichverteilt angeordnet sind und dass die einer gemeinsamen Ebene zugeordneten Löcher über Staudruckkanäle gleicher Länge an den Staudrucksensoren anschließen. Mit diesen Maßnahmen ist eine ordnungsgemäße Messung von Windgeschwindigkeit und Windrichtung möglich.

Die Kielsonde liefert die Strömungsgeschwindigkeit $_S u_{US}$, die x-Komponente der Anströmgeschwindigkeit im sensorfesten Koordinatensystem, also in Richtung der Strömungsgeschwindigkeitssondenlängsachse. Die Messung der Strömungsgeschwindigkeit in der Kielsonde kann über ein Pitotrohr, mittels Ultraschall oder über eine Hitzdraht Messung erfolgen. Entscheidend ist die Gleichrichtung der Strömung mittels der Kielsondenanordnung zur Bestimmung der anströmrichtungsunabhängigen Hauptwindgeschwindigkeit $_S u_{US}$. Vorzugsweise kann die Strömungsgeschwindigkeit über ein Staudruckrohr innerhalb der Kielsonde sowie einen statischen Druckaufnehmer zur Ermittlung eines Differenzdruckes am Innenmantel aufgenommen werden, was Information bezüglich der relativen Windgeschwindigkeit liefert. Probleme können sich bei Anströmwinkeln ergeben die größer +-60° sind. Für diese Winkelbereiche muss eine Abfrage in einer Auswertesoftware hinterlegt werden, welche diese Bereiche erkennt und einen Benutzer darüber informiert. Der Benutzer kann daraufhin den Sensor in einer für den Anströmwinkel bessere Position bringen.

Die Mantelsonde, also der als Mehrlochstaudrucksonde mit über den Mantelumfang verteilt angeordneten Löchern im Mantelkörper ausgebildete Mantelkörper ermöglicht die Messung einer Winkeltransformationsmatrix $A_{SW}$ mit den beiden Strömungswinkeln, dem Höhenanstellwinkel $\alpha$, und dem Seitenanströmwinkel $\beta$, bezogen auf das Sensorfeste Koordinatensystem. Die Messung der Winkeltransformationsmatrix erfolgt über die über den Mantelumfang verteilt angeordneten Löcher im Mantelkörper, also über die Druckmesspunkte an der Manteloberfläche. Die einzelnen Messpunkte zur Bestimmung der Anströmwinkel können dabei vorne innen, vorne außen, hinten außen, hinten innen und mittig außen am Mantelkörper angeordnet sein.

Ein weiteres Problem heute üblicher Windmesser an bewegten Objekten ist eine Kalibrierung der einzelnen Windkomponenten. So werden bei klassischen Mehrlochsonden alle drei Windkomponenten über dieselben Druckmesspunkte am Sondenkopf aufgenommen. Das macht eine Kalibrierung schwierig, da die Berechnung der absoluten Geschwindigkeit aus den einzelnen Drucksignalen sehr sensitiv auf Winkeländerungen ist. Dadurch wird auch die Messgenauigkeit der Anströmrichtungen stark beeinflusst. Die erfindungsgemäße Vorrichtung zur Geschwindigkeitserfassung löst dieses Problem indem die Strömungsgeschwindigkeit in Sensorlängsrichtung und die Anströmrichtung getrennt gemessen werden. Die Strömungsgeschwindigkeit in Sensorrichtung wird durch eine hinsichtlich des Anströmwinkels unempfindliche Kielsonde gemessen, während die Anströmrichtung selbst durch eine Mehrlochstaudrucksonde mit über den Mantelumfang verteilt angeordneten Löchern im Mantelkörper gemessen wird. Aus beiden Sensoren können dann alle drei Anströmkomponenten berechnet werden.

Für bestmögliche Messergebnisse wird vorgeschlagen, dass an die Löcher Staudrucksensoren angeschlossen sind, wobei die Löcher vorzugsweise über Staudruckkanäle an die Staudrucksensoren anschließen. Jeder Staudruckkanal führt dabei zu einem gesonderten Staudrucksensor, um gegenseitige Beeinflussungen der Messungen der einzelnen Messpunkte ausschließen zu können.

Die über den Mantelumfang verteilt angeordneten Löcher im Mantelkörper sind in einer senkrecht zu einer Strömungsgeschwindigkeitssondenlängsachse stehenden Ebene um die Strömungsgeschwindigkeitssondenlängsachse gleichverteilt angeordnet, damit der Strömungswinkel sauber aus etwaigen vorliegenden Differenzdrücken an den Messpunkten einer Ebene errechnet werden kann. Dazu schließen die einer gemeinsamen Ebene zugeordneten Löcher über Staudruckkanäle gleicher Länge an den Staudrucksensoren an, um für alle einer gemeinsamen Ebene zugeordneten Messpunkte gleiche Messverhältnisse, insbesondere Ansprechzeiten, gewährleisten zu können.

Zur Verbesserung der Auflösung des zu bestimmenden Strömungswinkels kann es von Vorteil sein, wenn in Richtung der Strömungsgeschwindigkeitssondenlängsachse wenigstens zwei beabstandete Ebenen mit über den Mantelumfang verteilt angeordneten Löchern vorgesehen sind.

Durch ein vorsehen eines, vorzugsweise im Mantelkörper eingebetteten, inertialen Navigationssystems und/oder eines, vorzugsweise im Mantelkörper eingebetteten, globalen Positionsbestimmungssystems, also durch wenigstens einen zusätzlichen Positions- und Lagesensoren im Multisensor können die dynamischen Störeinflüsse der Objektbewegung selbst gemessen und entsprechend korrigiert werden. Dazu können die Lage und die Geschwindigkeit der Vorrichtung im Raum bestimmt werden. Durch die Zusätzliche Information der drei dimensionalen Vorrichtungsgeschwindigkeit $_Sv_S$ im Raum kann die absolute Windgeschwindigkeit $_Sv_W$ aus der Anströmgeschwindigkeit $_Sv_{US}$ berechnet werden.

$$_Sv_W = {_Sv_{US}} - {_Sv_S}$$

Zur Verbesserung der Meßgenauigkeit können im Mantelkörper ein Temperatur-(°C) und/oder Luftfeuchtigkeitssensor (rF) eingebettet sein.

Zusätzlich ist es über technische Schnittstellen möglich, weitere Sensoren zu koppeln, also insbesondere in den erfindungsgemäßen Sensor zur Geschwindigkeitserfassung zu integrieren, und damit ergänzende Umgebungsdaten (z.B. Klimadaten wie Temperatur und Luftfeuchtigkeit oder Fahrbahndaten usw.) in einem Datalogger zu sammeln und in die sofortige oder spätere Auswertung einzubeziehen. Die Erfindung empfiehlt sich für einen Einsatz in der Entwicklung neuer aerodynamischer Fahrzeuge oder von Teilen davon, insbesondere um CFD-Simulationen mit Echtdaten validieren zu können.

Mit der erfindungsgemäßen Vorrichtung können reale, lokale Anströmbedingungen an bewegten Objekten erfasst werden.

Ein weiterer Einsatzfall ist die Kompetenzerweiterung von automatisierten und autonomen Fahrsystemen um die Erfassung der lokalen Strömungsbedingungen und Strömungsverhältnissen.

Bei der Berechnung der diversen Geschwindigkeiten im Raum aus den mit dem Trägheitsnavigationssystem aufgenommen Sensordaten kommt es infolge eines systemimmanenten Integrationsfehlers, der sich über die Messdauer aufsummiert, zu einem Drift. Mit Hilfe der Winddaten, welche Windgeschwindigkeit und Windrichtung in jedem Zeitpunkt genau bestimmen und abspeichern, kann dieser Integrationsfehler ausgeglichen werden. Über verschiedene Filter, wie Komplementärfilter, Kalmannfilter od. dgl. können die einzelnen Sensorsignale fusioniert werden. Dadurch können Integrationsfehler ausgeglichen werden indem quasistationäre Zustände der einzelnen Sensoren zum Abgleich verwendet werden. Erkennt der Sensor beispielsweise keinerlei Schräganströmung, d.h. ist die Hauptströmungsgeschwindigkeit die Richtige Geschwindigkeit und sind zusätzlich die Drehraten konstant, besteht die Möglichkeit die integrierte Fahrgeschwindigkeit mit der gemessenen Windgeschwindigkeit abzugleichen.

Die erfindungsgemäße Vorrichtung weist ein kompaktes Gehäuse auf, in dem alle Berechnungen intern durchgeführt werden, wozu eine Rechnereinheit mit autonomer Stromversorgung vorgesehen ist.

Kurze Beschreibung der Erfindung

In der Zeichnung ist der Erfindungsgegenstand beispielsweise dargestellt. Es zeigen

Fig. 1    eine Vorrichtung zur Geschwindigkeitserfassung in einer Ansicht von schräg vorne,

Fig. 2    die Vorrichtung in einer Ansicht von schräg hinten,

Fig. 3    a) bis d) die Vorrichtung in einem vereinfachten Schnitt in unterschiedlichen Bewegungs- und Strömungszuständen und

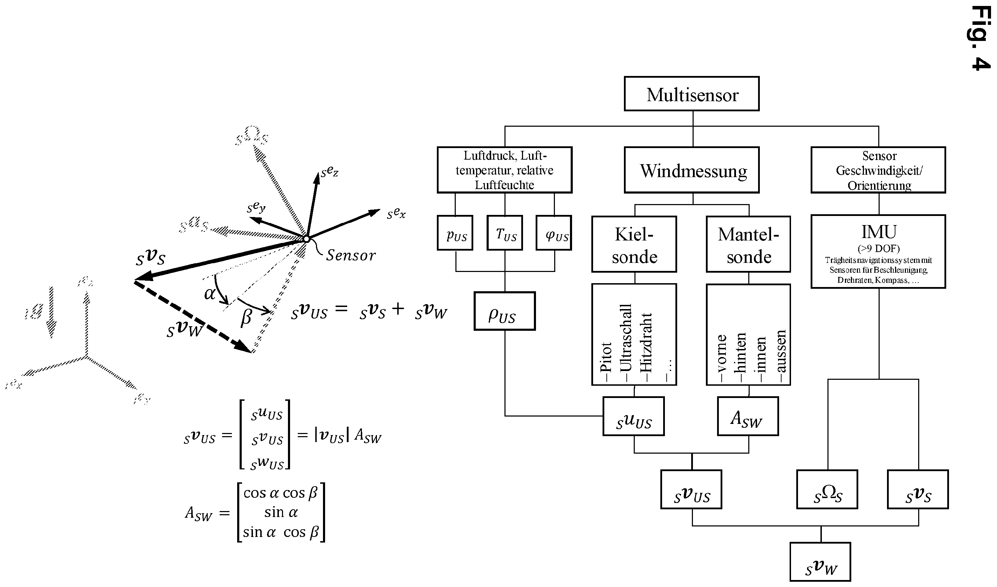

Fig. 4    ein Schaltbild einer erfindungsgemäßen Vorrichtung.

Wege zur Ausführung der Erfindung

Die Vorrichtung 1 zur Geschwindigkeitserfassung umfasst eine Kielsonde 2, die eine Strömungsgeschwindigkeitssonde aufweist, die von einem eine Venturidüse bildenden Mantelkörper 3 umfasst ist, wobei der Mantelkörper 3 als Mehrlochstaudrucksonde mit über den Mantelumfang verteilt angeordneten Löchern 4 im Mantelkörper 3 ausgebildet ist.

Die über den Mantelumfang verteilt angeordneten Löcher 4 im Mantelkörper 3 sind in einer senkrecht zu einer Strömungsgeschwindigkeitssondenlängsachse stehenden Ebene um die Strömungsgeschwindigkeitssondenlängsachse vorzugsweise gleichverteilt angeordnet.

In Richtung der Strömungsgeschwindigkeitssondenlängsachse sind wenigstens zwei beabstandete Ebenen mit über den Mantelumfang verteilt angeordneten Löchern vorgesehen. Mit einer Ebene kann allerdings auch das Auslangen gefunden werden.

Im Mantelkörper sind vorzugsweise ein Trägheitsnavigationssystem INS, ein globales Positionsbestimmungssystem GPS zusammen mit einer Auswerte- und Kommunikationseinheit angeordnet. Zudem sind vorzugsweise Temperatur- (°C) und/oder Luftfeuchtigkeitssensoren (rF) im Mantelkörper vorgesehen.

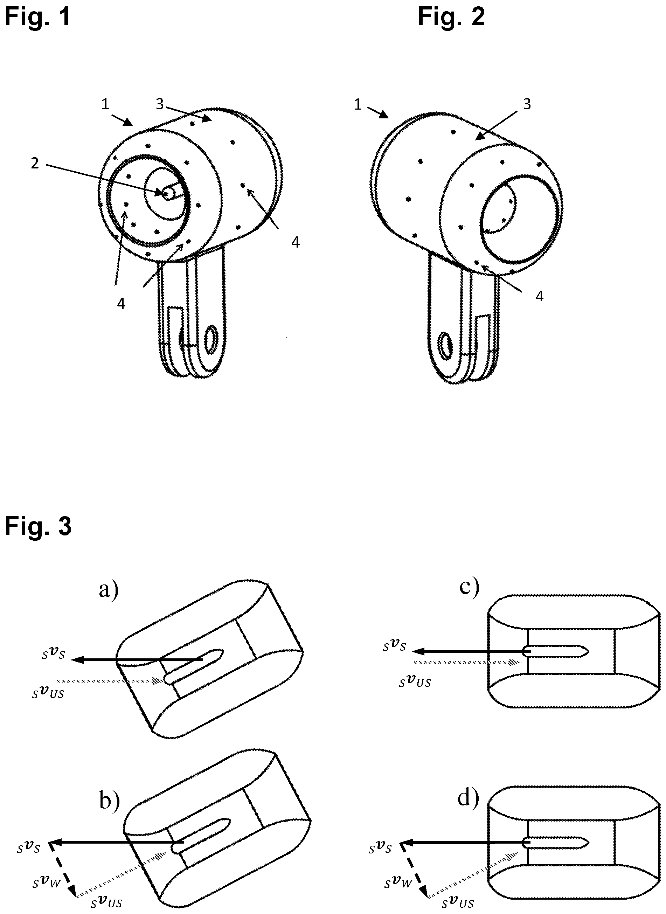

In Fig. 3 a) bis d) sind beispielhafte Bewegungs- und Strömungszustände dargestellt, welche bei Einzelsensoren gemäß dem Stand der Technik zu falschen Messergebnissen führen können.

Fall a) Die Sensorgeschwindigkeit $_Sv_S$ und der Windvektor $_Sv_{US}$ zeigen in die entgegengesetzte Richtung. Die Ergebnisse sind brauchbar, allerdings wäre eine Ausrichtung der Vorrichtung im Wind gemäß Fall c) besser bzw. genauer.

In den Fällen b) & d) herrscht ein gleicher globaler Wind $_Sv_W$ vor. Im Fall b) ist die Anströmrichtung des Windvektors $_Sv_{US}$ in Richtung der Sensorachse. Mit der Beispielsweise aus den INS und/oder GPS Daten bekannten Richtung und dem Betrag der Sensorgeschwindigkeit $_Sv_S$ kann der globale Wind $_Sv_W$ errechnet werden.

Im Fall d) ist die Sensorgeschwindigkeit $_Sv_S$ in Richtung der Sensorachse gerichtet. Die von der Mehrlochstaudrucksonde aufgenommene Schräganströmung läßt den Anströmwinkel errechnen und zeigt das Vorhandensein von globalem Wind $_Sv_W$. Beide Fälle b) & d) liefern das gleiche Ergebnis.

Die erfindungsgemäße Vorrichtung umfasst einen Windsensor mit Kielsonde und Mehrlochstaudrucksonde, Mittel zur Geschwindigkeits- und Lageerfassung sowie zusätzliche Sensorik zur Messung der Lufttemperatur, Luftfeuchte und Umgebungsdruck. Sämtliche Berechnungen werden mit einem in der Vorrichtung Verbauten Microcontroller durchgeführt. Die Sensor-Ausgangsgrößen werden in weiterer Folge über eine Kabel- oder eine Kabellose Schnittstelle, wie WLAN, Bluetooth, ANT+, od. dgl. an ein Endgerät übertragen. Der Sensor verfügt über eine eigene Energieversorgung. Diese kommt entweder aus einem eingebauten Akku mit Aufladeschaltung aus oder umfasst Komponenten besonders geringem Energiebedarf welche die benötigte Energie mit Energieerzeugung aus der Umgebung, beispielsweise dem Wind, beziehen.

## Patentansprüche

1. Vorrichtung (1) zur Geschwindigkeitserfassung mit einer Kielsonde (2), die eine Strömungsgeschwindigkeitssonde aufweist, die von einem eine Venturidüse bildenden Mantelkörper (3) umfasst ist, **dadurch gekennzeichnet, dass** der Mantelkörper (3) als Mehrlochstaudrucksonde mit über den Mantelumfang verteilt angeordneten Löchern (4) im Mantelkörper (3) ausgebildet ist, dass die über den Mantelumfang verteilt angeordneten Löcher (4) im Mantelkörper in einer senkrecht zu einer Strömungsgeschwindigkeitssondenlängsachse stehenden Ebene um die Strömungsgeschwindigkeitssondenlängsachse vorzugsweise gleichverteilt angeordnet sind und dass die einer gemeinsamen Ebene zugeordneten Löcher (4) über Staudruckkanäle gleicher Länge an den Staudrucksensoren anschließbar sind.

2. Vorrichtung nach Anspruch 1, **dadurch gekennzeichnet, dass** an die Löcher (4) Staudrucksensoren angeschlossen sind, wobei die Löcher (4) vorzugsweise über Staudruckkanäle an die Staudrucksensoren anschließen.

3. Vorrichtung nach Anspruch 1, **dadurch gekennzeichnet, dass** in Richtung der Strömungsgeschwindigkeitssondenlängsachse wenigstens zwei beabstandete Ebenen mit über den Mantelumfang verteilt angeordneten Löchern (4) vorgesehen sind.

4. Vorrichtung nach einem der Ansprüche 1 bis 3, **gekennzeichnet durch** ein, vorzugsweise im Mantelkörper (3) eingebettetes, Trägheitsnavigationssystem (INS).

5. Vorrichtung nach einem der Ansprüche 1 bis 4, **gekennzeichnet durch** ein, vorzugsweise im Mantelkörper (3) eingebettetes, globales Positionsbestimmungssystem (GPS).

6. Vorrichtung nach einem der Ansprüche 1 bis 4, **gekennzeichnet durch** einen, vorzugsweise im Mantelkörper (3) eingebetteten, Temperatur- (°C) und/oder Luftfeuchtigkeitssensor (rF).

## Claims

1. An apparatus (1) for velocity detection comprising a Kiel probe (2) having a flow velocity probe which is encompassed by a shell element (3) forming a Venturi nozzle, **characterized in that** the shell element (3) is designed as a multi-hole dynamic pressure probe having holes (4) in the shell element (3), arranged distributed across the circumference of the shell, **in that** the holes (4) in the shell element (3) arranged distributed across the circumference of the shell are preferably arranged uniformly distributed about a longitudinal axis of the flow velocity probe in a plane which is perpendicular to the longitudinal axis of the flow velocity probe and **in that** the holes (4) allocated to a common plane are connectable to the dynamic pressure sensors via dynamic pressure channels of identical length.

2. An apparatus according to claim 1, **characterized in that** dynamic pressure sensors are connected to the holes (4), wherein the holes (4) preferably connect to the dynamic pressure sensors via dynamic pressure channels.

3. An apparatus according to claim 1, **characterized in that**, in the direction of the longitudinal axis of the flow velocity probe, at least two planes spaced apart from each other are provided with holes (4) arranged distributed across the circumference of the shell.

4. An apparatus according to one of claims 1 to 3, **characterized by** an inertial navigation system (INS), which is preferably embedded in the shell element (3).

**5.** An apparatus according to one of claims 1 to 4, **characterized by** a global positioning system (GPS), which is preferably embedded in the shell element (3).

**6.** An apparatus according to one of claims 1 to 5, **characterized by** a temperature (°C) and/or relative humidity sensor (rF), which is preferably embedded in the shell element (3)

**Revendications**

**1.** Dispositif (1) pour mesurer la vitesse, comprenant une sonde à quille (2) qui comporte une sonde de vitesse d'écoulement qui est entourée par un corps d'enveloppe (3) formant une buse Venturi, **caractérisé en ce que** le corps d'enveloppe (3) est réalisé sous forme de sonde de pression dynamique à multiples trous avec des trous (4) répartis sur la périphérie de l'enveloppe dans le corps d'enveloppe (3), que les trous (4) répartis sur la circonférence de l'enveloppe dans le corps d'enveloppe sont disposés de préférence de manière uniforme dans un plan perpendiculaire à un axe longitudinal de la sonde de vitesse d'écoulement autour de l'axe longitudinal de la sonde de vitesse d'écoulement et que les trous (4) associés à un plan commun peuvent être raccordés aux capteurs de pression dynamique par des canaux de pression dynamique de même longueur.

**2.** Dispositif selon la revendication 1, **caractérisé en ce que** des capteurs de pression dynamique sont raccordés aux trous (4), les trous (4) étant de préférence raccordés aux capteurs de pression dynamique par l'intermédiaire de canaux de pression dynamique.

**3.** Dispositif selon la revendication 1, **caractérisé en ce qu'**au moins deux plans espacés avec des trous (4) répartis sur la circonférence de l'enveloppe sont prévus dans la direction de l'axe longitudinal de la sonde de vitesse d'écoulement.

**4.** Dispositif selon l'une des revendications 1 à 3, **caractérisé par** un système de navigation à inertie (INS) de préférence intégré dans le corps de l'enveloppe (3).

**5.** Dispositif selon l'une des revendications 1 à 4, **caractérisé par** un système de positionnement global (GPS) intégré de préférence dans le corps de l'enveloppe (3).

**6.** Dispositif selon l'une des revendications 1 à 4, **caractérisé par** un capteur de température (°C) et/ou d'humidité de l'air (rF) intégré de préférence dans le corps de l'enveloppe (3).

**Fig. 1**

**Fig. 2**

**Fig. 3**

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8706710 A1
- US 5365795 A
- GB 2558709 A
- US 2019301969 A1
- DE 19735724 A1
- WO 2017197524 A1
- US 2018321272 A1